# EUROPEAN PATENT SPECIFICATION

(11) **EP 2 799 511 B1**
(45) Date of publication and mention of the grant of the patent: **22.01.2020**
(21) Application number: 14166600.8
(22) Date of filing: 30.04.2014
(51) Int. Cl.: C09K 5/10

(54) **Heat transfer liquid composition and energy saving heating method using it**
Wärmeübertragungsflüssigkeitszusammensetzung und energiesparendes Heizverfahren damit
Composition liquide de transfert de chaleur et procédé de chauffage à économie d'énergie l'utilisant

(30) Priority: 30.04.2013 GB 201307765
(43) Date of publication of application: 05.11.2014
(73) Proprietor: Stephano CHM gcv, 9000 Gent (BE)
(72) Inventor: Hammink, Maarten, 9250 Waasmunster (BE)
(74) Representative: Office Kirkpatrick

(56) References cited:
- EP-A1- 0 105 803
- WO-A1-94/13765
- CN-A- 101 787 263
- RU-C1- 2 370 513
- US-A- 3 265 620
- US-A- 4 146 488
- US-A1- 2004 256 595
- US-A1- 2009 082 240

## Description

### Field of the invention

The present invention relates to a non-corrosive heat transfer liquid composition. The present invention also relates to a method using such a non-corrosive heat transfer liquid composition as a replacement for water.

### Background of the invention

The search for energy saving solutions has been a high priority over the past decades and is now a top priority in the field of domestic and industrial heating systems and methods. It is well known that water as a heating transfer medium can be replaced by a number of alternative liquids like glycol, certain types of oil and certain combinations of amine compounds and glycol.

For instance EP 1564277 discloses a heat transfer medium liquid composition comprising water and/or a monohydric or polyhydric alcohol as the main component and further comprising:
(a) one or more kinds of metal and/or metal oxide particles having an average diameter particle below 0.1 µm,
(b) one or more kinds of polycarboxylic acids and/or salts thereof, and
(c) at least on kind of a metal corrosion inhibitor.
Due to the number and type of components, the heat transfer medium liquid composition of EP 1564277 is not cost effective and therefore does not satisfactorily compete with water and other previously known heat transfer liquid media for use in domestic and industrial heating systems and methods.

WO 2009/090533 relates to an energy saving liquid for heating systems, consisting of 10% of triethanolamine, 2% of glycerol, 38% of ethylene glycol, 49.9% of water and 0.1 % of a water-soluble dye.

US 2004/0256595 discloses a coolant comprising phosphoric acid and butoxyethanol or glycol ether.

EP0105803 discloses heat transfer fluids comprising orthosilicate ester. These compositions may comprise an alkanolamine borate or an alkanolamine phosphate.

This heat transfer liquid composition however suffers from several drawbacks including an excessively high viscosity, an impurity pick-up capacity due to the greasy structure of the liquid and, last but not least, an excessive cost level.

There is therefore a need in the art for a heat transfer liquid composition exhibiting major advantages when compared to the previously known liquid solutions.

In particular there is a need in the art for a heat transfer liquid composition having none of the above-stated drawbacks regarding viscosity, greasy structure and cost level.

There is especially a need in the art for a heat transfer liquid composition having a viscosity very similar to water, not being greasy and being economic in terms of cost for use in domestic and industrial heating systems and for a corresponding method for heating.

### Summary of the invention

A major benefit of present invention is to provide a liquid heat transfer composition with a significantly higher density than water and other glycol based solutions, while keeping the viscosity at a similar level as water, and while achieving a heat absorbing capacity, a heat transportation capacity and a heat release suitable for use in circulating energy saving heating systems both at domestic and industrial scale.

According to a first embodiment of the present invention, this is achieved by means of the liquid composition as defined in claim 1. Since most reaction products defined in claim 1 are known in the literature and are known to be miscible with water, the invention relates to the use of a mixture of water and a reaction product of a monoalkanolamine having an alkyl group from 2 to 4 carbon atoms and an inorganic acid selected from the group consisting of phosphoric acid and sulfamic acid, wherein the weight proportion of water in said mixture is from 10% to 95% and wherein the weight proportion of the reaction product in said mixture is from 5% to 90%, as a heat transfer liquid medium.

Due to its substantially higher density compared to water and due to its chemical and physical properties, the liquid composition according to this invention has an increased thermal conductivity when compared to water and a higher heat absorbing capacity than water as well as a higher heat transportation capacity than water, while the heat release of the liquid is comparable with water. The liquid is pH neutral and non-corrosive, non-abrasive and exhibits a viscosity very similar to water, thus not causing friction. The heat transfer liquid medium of the present invention is non-corrosive and prevents scale formation and impurities pick-up, therefore keeping the circulating heating system clean for a long period of time. The liquid is clear (substantially transparent), colorless and odorless and consists of an inorganic salt of an alkanolamine formed by reaction between a monoalkanolamine and phosphoric acid or sulfamic acid, miscible with or dissolved in water. Preferably the liquid does not contain any glycol based substance. The liquid composition of the present invention can efficiently be used in any heating system that usually runs with water as heat transfer medium, regardless the energy source (gas, fuel, coal, wood, electricity, solar panels...), whilst providing significant energy saving as compared to water and other conventional heat transfer media. The liquid composition of the present invention does not affect any of the materials typically used in heating systems (metal parts such as steel or alloys, plastic parts such as taps or valves, rubber or elastomeric parts such as seals).

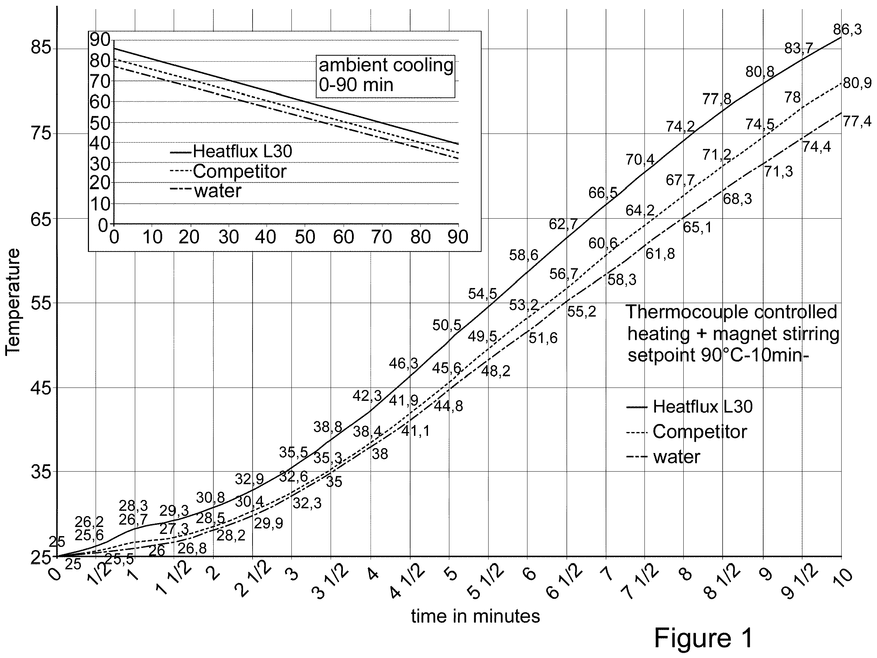

### Brief description of the drawing

The single figure shows the heat transfer characteristics of a heat transfer liquid medium according to the invention, as a function of time, as compared to water and to the liquid composition of the prior art WO 2009/090533.

### Detailed description of the invention

Different specific embodiments of the present invention are presented below and are defined in the dependent claims. For the sake of clarity, many of the chemical substances recited below are stated together with their Chemical Abstracts number (CAS).

A particular embodiment of the present invention relates to a heat transfer liquid medium according to claim 1 wherein the weight proportion of water in said mixture is from 15% to 80%, and wherein the weight proportion of the reaction product in said mixture is from 20% to 85%. In a still more specific embodiment, the weight proportion of water in said mixture is from 30% to 70%, and the weight proportion of the reaction product in said mixture is from 30% to 70%. As will readily be understood by the person skilled in the art, the respective weight proportions of water and the reaction product of this invention are appropriately selected depending upon a range of parameters such as the water miscibility or water solubility of the reaction product, the target heat transfer characteristics of the composition and so on, therefore depending upon the selected alkanolamine and the selected inorganic acid,

The present invention relates to a heat transfer liquid medium as defined hereinabove wherein the said alkanolamine is a monoalkanolamine with an alkyl group from 2 to 4 carbon atoms. Such monoalkanolamines with an alkyl group from 2 to 4 carbon atoms are well known in the art and commercially available and may be selected from the group consisting of monoethanolamine (2-aminoethanol, CAS 141-43-5), N-methylethanol-amine (CAS 109-83-1), 3-aminopropanol (alaninol, CAS 2749-11-3), 1-amino-2-propanol, diglycolamine (2-(2-aminoethoxyethanol, CAS 929-06-6), and 4-amino-1-butanol.

The monoalkanolamine used in the present invention may also be a mixture of two or more, for instance three, different species, e.g. a mixture of a monoalkanolamine, a dialkanolamine and a trialkanolamine wherein the alkyl group in each species may be the same or different. This is especially advantageous in the case of monoethanolamine which, due to its typical process of manufacture, is usually obtained as a mixture with minor amounts of diethanolamine and triethanolamine and therefore needs not be purified for use in the present invention, thus achieving additional cost benefits.

The present invention relates to a heat transfer liquid medium as defined hereinabove, wherein the said inorganic acid is selected from the group consisting of phosphoric acid (pKa = 2.1, 7.2 and 12.3) and sulfamic acid (pKa = 1.0).

The result of such combination, i.e. the reaction product, may be a covalent compound or a salt, depending upon the selected inorganic acid and the selected monoalkanolamine. Representative examples of reaction products being in the form of a salt include, but are not limited to, ethanolamine sulfamate. Representative examples of reaction products being in the form of a covalent compound include, but are not limited to, phosphorylethanolamine (CAS 1071-23-4), a compound well known in the biological field, especially as a pharmaceutical or parapharmaceutical active ingredient. The present invention also encompasses mixtures of different reaction products, e.g. different salts, with water.

Another particular embodiment of the present invention relates to a heat transfer liquid medium as defined hereinabove, wherein the viscosity of said heat transfer liquid medium does not differ from the viscosity of water by more than 15% at a given temperature, e.g. at about 20°C.

Another particular embodiment of the present invention relates to a heat transfer liquid medium as defined hereinabove, having a pH in the range from about 5 to 10, for instance from 6 to 9, or from 6.5 to 8.5. As is readily understood by the person skilled in the art, the pH of the liquid composition of the present invention may be kept within one of the above specified ranges by appropriately selecting the respective proportions of water, the monoalkanolamine and the inorganic acid.

Another particular embodiment of the present invention relates to a heat transfer liquid medium as defined hereinabove, having a specific heat capacity which does not differ by more than 25% from the specific heat capacity of water at a given temperature. The quantity of heat required to raise the temperature of a substance by one degree Celsius is called the specific heat capacity of the substance. The specific heat per gram of water is 4.18 J/g.°C at normal pressure and room temperature (20°C). Measurement methods for specific heat capacity are well known in the art.

Another particular embodiment of the present invention relates to a heat transfer liquid medium as defined hereinabove, having a heat release that is higher than the heat release of water at a given temperature.

Another aspect of the present invention relates to a method for heating a room, comprising circulating a heat transfer liquid medium in a heating system located in said room, characterized in that said heat transfer liquid medium is in accordance with any one of the above embodiments. A heating system including, or filled with, the said heat transfer liquid medium does not form a part of the current invention. An advantage of such a heating method and system is a significant energy saving with respect to the circulation, under identical conditions, of conventional heat transfer media such as water, glycols and mixtures thereof. According to a specific embodiment, the heating method is characterized by circulating said heat transfer liquid medium at a temperature within a range from 30 to 90°C, for instance from 40 to 70°C. Another advantage of such a heating method and system is a reduced maintenance cost due to the non corrosive character of the heat transfer liquid medium.

According to another specific embodiment the heat transfer liquid medium of the present invention exhibits a density of 1.01 g/cm³ up to 1.45 g/cm³ depending upon the water proportion and the kind of reaction product mixed therewith. Since the heat transfer liquid medium of the present invention has a higher thermal conductivity compared to water, and can be produced with densities significantly higher than water, this liquid is a better heat transfer medium than water. e.g. at a density of 1.20 g/cm³, 20% more mass will be circulating in the heating system, thus transporting more heat energy. This mass being heated up faster (with less energy than required for water) and taking in account that the heat release of the liquid is comparable to water, the use of this heat transfer liquid will result in energy saving and a more cost-efficient heating of rooms where the liquid is circulated.

The following examples are given for the purpose of illustration of particular embodiments of the present invention, and their resulting advantages, and should not be construed as limiting the scope of the present invention.

### Example 1- heat transfer liquid based on phosphorylethanolamine

1 kg of an energy saving heat transfer liquid medium is prepared as follows:
- 400 grams of phosphoric acid (purity 85%) is first diluted with 120 grams of water,
- 60 grams of mono ethanolamine is then added, resulting in a partial reaction to form phosphorylethanolamine,
- 420 grams of an ammonia aqueous solution (25%) is then added to the above mixture, resulting in a phosporylethanolamine - mono ammonium phosphate composition with neutral pH and a density of about 1.30 g/cm³.

This liquid composition has been shown to provide a better thermal conductivity than water and to be non-corrosive. Cost wise this liquid composition is far less expensive than e.g. glycol.

### Example 2 - heating fluid based on monoethanolamine sulfamate

1 kg of an energy saving heat transfer liquid medium is prepared as follows:
- 200 g of monoethanolamine is added to 500 g of water,
- 300 g of sulfamic acid is then added to the above aqueous solution, causing an exothermic reaction, forming a 50% monoethanolamine sulfamate salt solution C2H10N2O4S

This liquid composition has been shown to exhibit a better thermal conductivity than water and to be non-corrosive. Cost wise this liquid composition is far less expensive than e.g. glycol.

Evidence for energy saving is presented in the single figure showing the temperature obtained as a function of time in a set-up of a thermocouple controlled heating with magnetic stirring, comparison being made between:
- The heat transfer liquid medium of example 2 (according to the present invention), designated as Heatflux L30,
- A heat transfer liquid composition as described in WO 2009/090533, PCT/IB2009/000043 (designated as "competitor"), an
- Water.

The figure clearly demonstrates that a 2°C increase is already obtained after 1.5 minute heating, and a 5°C increase is obtained after 5.5 minutes heating.

## Claims

1. A heat transfer liquid medium comprising a mixture of water and a reaction product of a monoalkanolamine wherein the alkyl group has from 2 to 4 carbon atoms and an inorganic acid selected from the group consisting of phosphoric acid and sulfamic acid, wherein the weight proportion of water in said mixture is from 10% to 95%, and wherein the weight proportion of the reaction product in said mixture is from 5% to 90%.

2. A heat transfer liquid medium according to claim 1, wherein the said monoalkanolamine is selected from the group consisting of monoethanolamine, N-methylethanolamine, 3-aminopropanol, 1-amino-2-propanol, diglycolamine and 4-amino-1-butanol.

3. A heat transfer liquid medium according to claim 1, wherein the said reaction product is selected from the group consisting of ethanolamine sulfamate and phosphoryl-ethanolamine.

4. A heat transfer liquid medium according to any one of claims 1 to 3, wherein the viscosity of said heat transfer liquid medium does not differ from the viscosity of water by more than 15%.

5. A heat transfer liquid medium according to any one of claims 1 to 4, having a pH in the range from 5 to 10.

6. A method for heating a room, comprising circulating a heat transfer liquid medium in a heating system, **characterized in that** said heat transfer liquid medium is according to any one of claims 1 to 5.

7. A heating method according to claim 6, **characterized in that** said heat transfer liquid medium is circulated at a temperature from 30 to 90°C.

## Patentansprüche

1. Wärmeübertragungsflüssigkeitsmedium, das eine Mischung aus Wasser und einem Reaktionsprodukt eines Monoalkanolamins, wobei die Alkylgruppe 2 bis 4 Kohlenstoffatome aufweist, und einer anorganischen Säure, ausgewählt aus der Gruppe bestehend aus Phosphorsäure und Sulfaminsäure, umfasst, wobei der Gewichtsanteil von Wasser in der Mischung 10 % bis 95 % beträgt, und wobei der Gewichtsanteil des Reaktionsprodukts in der Mischung 5 % bis 90 % beträgt.

2. Wärmeübertragungsflüssigkeitsmedium nach Anspruch 1, wobei das Monoalkanolamin ausgewählt ist aus der Gruppe bestehend aus Monoethanolamin, N-Methylethanolamin, 3-Aminopropanol, 1-Amino-2-propanol, Diglykolamin und 4-Amino-1-butanol.

3. Wärmeübertragungsflüssigkeitsmedium nach Anspruch 1, wobei das Reaktionsprodukt ausgewählt ist aus der Gruppe bestehend aus Ethanolaminsulfamat und Phosphorylethanolamin.

4. Wärmeübertragungsflüssigkeitsmedium nach einem der Ansprüche 1 bis 3, wobei sich die Viskosität des Wärmeübertragungsflüssigkeitsmediums um nicht mehr als 15 % von der Viskosität von Wasser unterscheidet.

5. Wärmeübertragungsflüssigkeitsmedium nach einem der Ansprüche 1 bis 4, das einen pH-Wert im Bereich von 5 bis 10 aufweist.

6. Verfahren zum Heizen eines Raumes, das Zirkulieren eines Wärmeübertragungsflüssigkeitsmediums in einem Heizsystem umfasst, **dadurch gekennzeichnet, dass** das Wärmeübertragungsflüssigkeitsmedium einem der Ansprüche 1 bis 5 entspricht.

7. Heizverfahren nach Anspruch 6, **dadurch gekennzeichnet, dass** das Wärmeübertragungsflüssigkeitsmedium bei einer Temperatur von 30 bis 90 °C zirkuliert wird.

## Revendications

1. Un liquide caloporteur comprenant un mélange d'eau et d'un produit de réaction d'une monoalkanolamine où le groupe alkyle a de 2 à 4 atomes de carbone et un acide inorganique sélectionné dans le groupe constitué de l'acide phosphorique et de l'acide sulfamique, où la proportion en poids de l'eau dans ledit mélange est de 10% à 95%, et où la proportion en poids du produit de réaction dans ledit mélange est de 5% à 90%.

2. Le liquide caloporteur selon la revendication 1, où ladite monoalkanolamine est sélectionnée dans le groupe constitué de la monoéthanolamine, la N-méthyléthanolamine, le 3-aminopropanol, le 1-amino-2-propanol, la diglycolamine et le 4-amino-1-butanol.

3. Le liquide caloporteur selon la revendication 1, où ledit produit de réaction est sélectionné dans le groupe constitué du sulfamate d'éthanolamine et du phosphoryle-éthanola mine.

4. Le liquide caloporteur selon l'une des revendications 1 à 3, où la viscosité dudit liquide caloporteur ne diffère pas de la viscosité de l'eau de plus de 15%.

5. Le liquide caloporteur selon l'une des revendications 1 à 4, ayant un pH compris entre 5 et 10.

6. Une méthode pour chauffer une pièce, comprenant la circulation d'un liquide caloporteur dans un système de chauffage, **caractérisé en ce que** ledit liquide caloporteur est selon l'une des revendications 1 à 5.

7. La méthode pour chauffer une pièce selon la revendication 6, **caractérisée en ce que** ledit liquide caloporteur circule à une température comprise entre 30 et 90°C.
